# EUROPEAN PATENT SPECIFICATION

(11) **EP 0 577 500 B1**
(45) Date of publication and mention of the grant of the patent: **21.08.1996**
(21) Application number: 93401676.7
(22) Date of filing: 29.06.1993
(51) Int. Cl.: B60Q 1/14, H01H 9/26

(54) **Electrical switch combined for the head lights and at least a fog light of an automotive vehicle**
Elektrischer Schalter kombiniert für die Hauptscheinwerfer und mindestens eine Nebellampe eines Fahrzeuges
Commutateur électrique, combiné des feux principaux d'éclairage et d'au moins un feu antibrouillard d'un véhicule automobile

(30) Priority: 29.06.1992 FR 9207969
(43) Date of publication of application: 05.01.1994
(73) Proprietor: VALEO ELECTRONIQUE, 94000 Creteil (FR)
(72) Inventor: Eychenne, Michel, F-91000 Evry (FR)
(74) Representative: Gamonal, Didier

(56) References cited:
- DE-A- 3 006 066
- FR-A- 2 657 456
- US-A- 5 047 600

## Description

La présente invention concerne un commutateur électrique pour la commande combinée des feux principaux d'éclairage et d'au moins un feu antibrouillard arrière d'un véhicule automobile, du genre comportant un sélecteur d'éclairage des feux principaux, à position dite arrêt/ville/route, à la disposition de l'usager, un sélecteur d'éclairage d'au moins un feu antibrouillard arrière également à la disposition de l'usager.

Usuellement un véhicule automobile comporte deux feux (ou projecteurs) antibrouillard avant et au moins un feu (ou projecteur) antibrouillard arrière.

La législation européenne réglemente l'utilisation des feux antibrouillard. Ainsi lorsque le véhicule est équipé seulement d'au moins un feu antibrouillard arrière, son utilisation n'est autorisée que lorsque le sélecteur d'éclairage des feux principaux est en position route (code ou phare).

Lorsque le véhicule est équipé à la fois des feux antibrouillard avant ou arrière, l'usage du feu antibrouillard avant est autorisé lorsque le sélecteur d'éclairage des feux principaux est en position ville (lanterne) ou en position route (code/phare), l'usage du feu antibrouillard arrière n'est autorisé comme précédemment, que lorsque le sélecteur d'éclairage des feux principaux est en position route ainsi que lorsque le feu antibrouillard avant est allumé.

De tels dispositifs présentent un inconvénient. En effet si le conducteur, par oubli, laisse le sélecteur d'éclairage du feu antibrouillard arrière dans la position de commande, puis ultérieurement fait usage des codes ou des phrares, le feu antibrouillard arrière s'allume, en infraction avec la réglementation, dans le cas où il n'y a pas de brouillard.

Pour pallier cet inconvénient, on a prévu dans la demande EP-A-0 426 538 un dispositif de réinitialisation mécanique de la commande du feu antibrouillard arrière comportant un curseur et des moyens de rampes intégrés dans une manette portant lesdits sélecteurs.

Bien que donnant satisfaction, il peut être souhaitable d'intégrer ce dispositif de réinitialisation mécanique au niveau du boîtier associé à la manette.

La présente invention a pour objet de répondre à ce souhait.

Suivant l'invention, un commutateur du type sus-indiqué est caractérisé en ce que, à chaque sélecteur, est associé un chariot de commande actionné par ledit sélecteur, en ce que lesdits chariots sont montés mobiles en translation dans un boîtier l'un au-dessus de l'autre en étant séparés par une cloison, en ce que ladite cloison est échancrée pour passage d'une butée portée par le chariot, dit chariot principal, associé au sélecteur d'éclairage des feux principaux, et en ce que ladite butée est propre à coopérer avec une contre-butée portée par le chariot, dit chariot secondaire, associé au sélecteur d'éclairage du feu antibrouillard arrière, en sorte qu'une réinitialisation mécanique de la commande du feu antibrouillard arrière est obtenue, lorsque le chariot principal passe de la position ville à la position arrêt.

Grâce à l'invention, la réinitialisation mécanique est effectuée à l'intérieur du boîtier du commutateur, pour entraînement du chariot secondaire par le chariot principal à l'aide de butée et de la contre-butée, en sorte que la manette de commande est simplifiée.

Cette disposition est favorable car l'espace disponible au niveau du boîtier est plus important que l'espace disponible au niveau de la manette, en sorte que la manoeuvre de réinitialisation peut être plus précise.

Avantageusement la manette peut être exempt de liaison filaire. Ainsi toute la commutation électrique est effectuée à l'intérieur du boîtier et la manette est esthétique, car elle est notamment exempt de renflement pour le passage de fils.

Il est ainsi possible d'effectuer des commutations électriques de grande puissance, la manette n'ayant qu'une fonction mécanique.

Suivant une caractéristique, la butée est escamotable et des moyens de rampes sont prévus au niveau de la cloison de séparation.

Ainsi il est possible de réinitialiser le feu antibrouillard arrière sans réinitialiser les feux antibrouillard avant.

La description qui va suivre illustre l'invention en regard des dessins annexés dans lesquels :
- la figure 1 est une vue partielle en coupe du boîtier du commutateur selon l'invention ;
- la figure 2 est une vue en coupe axiale de la manette associée au boîtier de la figure 1 ;
- la figure 3 est une vue analogue à la figure 1 pour un second exemple de réalisation.

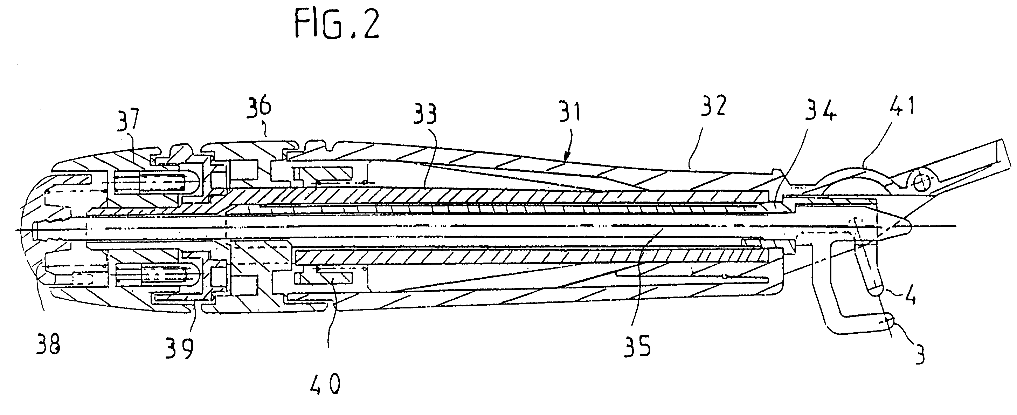

Dans les figures 1 et 2, est illustré un commutateur électrique pour la commande combinée des feux d'éclairage principaux, et des feux antibrouillard arrière et avant d'un véhicule automobile.

Ce commutateur comporte un sélecteur d'éclairage 37 des feux principaux, dit par la suite sélecteur principal, à position dite arrêt/ville/route, ainsi qu'un sélecteur d'éclairage 36, d'au moins un feu antibrouillard arrière, dit ici par commodité sélecteur secondaire.

Dans la suite de la description, on supposera que le véhicule comporte deux feux antibrouillard avant, étant entendu, par exemple dans le cas d'une moto, qu'un seul feu antibrouillard avant peut exister.

On rappellera que le sélecteur principal 37 peut occuper trois positions, à savoir (figure 1), la position 0 (arrêt), la position V (ville), la position R (route).

En position 0 tous les feux principaux du véhicule sont éteints. En position V, les lanternes du véhicule sont allumées. En position R, les codes ou les phares du véhicule sont allumés.

Le sélecteur secondaire 36 permet de commander ou non le feu antibrouillard arrière et ici également le feu antibrouillard avant.

Suivant l'invention, un commutateur du type sus-indiqué est caractérisé en ce que, à chaque sélecteur principal 37 et secondaire 36, est associé un chariot, dit ici par commodité respectivement chariot principal 2 et chariot secondaire 1, en ce que lesdits chariots sont montés mobiles à translation dans un boîtier 42,43,44, l'un au-dessus de l'autre en étant séparés par une cloison 45, dite cloison de séparation, en ce que ladite cloison 45 est échancrée pour passage d'une butée 6 portée par le chariot principal 2, et en ce que ladite butée 6 est propre à coopérer avec une contre-butée 12 portée par le chariot secondaire 1, en sorte qu'une réinitialisation mécanique de la commande du feu antibrouillard arrière est obtenue, lorsque le chariot principal 2 passe de la position ville à la position arrêt.

Plus précisément le boîtier, de préférence en matière plastique, de forme globalement parallélépipèdique, est en trois parties 42,43,44 reliées entre elles par des moyens d'encliquetage, ici sous forme de pattes s'engageant dans des fentes complémentaires comme décrit dans le document FR-A-2 657 458, auquel on se reportera.

Comme dans ce document, entre la partie 42 formant couvercle et la partie 43 formant ceinture, est montée une manette rotulante 31, lesdites parties 42,43 étant conformées pour coopérer avec une portion sphérique 41, que présente ladite manette 31 à son extrémité arrière.

La partie basse 44 ou platine porte un circuit prédécoupé 47 avec des pistes, notamment pour l'alimentation de l'éclairage des feux principaux du véhicule automobile.

Cette partie 44 présente également des languettes d'alimentation électriques 48,49 (figure 1) pour formation d'une première partie d'un dispositif de connexion et alimentation électrique du commutateur. C'est avec ce circuit 47, que sont propres à coopérer des plots de contact 50 portés par le chariot principal 2 pour établissement des circuits électriques permettant l'éclairage des feux principaux.

Ce chariot principal 2, ici en matière plastique, est déplaçable en translation entre des parois longitudinales de la ceinture 43 par un élément d'entraînement portant un index 3 ou doigt inverseur. Le chariot 2 se déplace de gauche à droite et vice versa dans le plan de la figure 1, tandis que le doigt 3 se déplace en rotation dans le plan de cette figure et est engagé dans un trou borgne 21 du chariot 2 pour entraînement en translation de celui-ci. L'extrémité du doigt 3 est avantageusement en forme de rotule pour ce faire.

C'est ce chariot 2 qui peut occuper les trois positions stables 0,V,R, mentionnées ci-dessus, en étant déplacées par le sélecteur principal 37. Transversalment, le chariot 1 est maintenu par le fond de la platine 44 et la cloison 45.

Le chariot secondaire 1 est à l'image du chariot principal 2 et se déplace comme celui-ci de gauche à droite et vice versa dans le plan de la figure 1 par l'intermédiaire de deux doigts d'entraînement 4, à extrémité arrondie, engagés dans un trou 11 dudit chariot. Le trou 11 est traversant pour permettre le passage du doigt 3.

Ce chariot 1, ici en matière plastique, est déplaçable parallèlement au chariot 2 entre les deuxdites parois longitudinales de la ceinture 43. Ce chariot 1, actionné par le sélecteur secondaire 36, peut occuper trois positions stables, à savoir une première position BAR (feu antibrouillard arrière allumé), une position BAV (feu antibrouillard avant allumé) et une position 0 (arrêt). Ce chariot 1 est séparé du chariot 2 par la cloison de séparation 45.

Pour ce faire, la manette 31 est conformée, suivant une caractéristique de l'invention, pour ne présenter que des parties mécaniques.

Cette manette comporte un corps 32, un fourreau central 33 solidaire du corps 32, le sélecteur secondaire 36 monté de manière rotative sur le fourreau 33, un premier arbre d'entraînement 34 solidaire en rotation du sélecteur secondaire 36 et pénétrant dans l'alésage interne du fourreau 33 en étant guidé à translation et à rotation par celui-ci, un bouton d'extrémité 38 solidaire en rotation d'un second arbre d'entraînement 35 traversant le premier arbre d'entraînement 34.

Le fourreau 33 est prolongé vers l'avant (vers le bouton 38) pour supporter à rotation le sélecteur principal 37. Des moyens de liaison à rotation, avec mobilité axiale, sont prévus entre le sélecteur principal 37 et le bouton d'extrémité 38. Ici ces moyens sont du type tenon-mortaise, le sélecteur principal 37, sous forme d'une bague, présentant une face avant creuse dotée d'une saillie axiale propre à coopérer avec une rainure axiale portée par le bouton 38 (figure 2). Une liaison du type tenon-mortaise est ainsi réalisée, le bouton 38 pouvant se déplacer axialement par rapport à la bague 37 en étant lié en rotation à ladite bague 37 grâce à la saillie de la bague s'engageant, de manière complémentaire à translation, dans la rainure du bouton 38. Le bouton 38 permet la commande de l'avertisseur sonore du véhicule par translation de l'arbre 35.

Bien entendu on peut inverser les structures, la bague 37 portant la mortaise et le bouton 38 le tenon.

Le fourreau 33 est métallique, tout comme les arbres 34 et 35, et donne de la rigidité à la manette tout en servant de pièce de guidage notamment à l'arbre 34 et à la bague 37.

Les éléments 32,36,37,38 sont avantageusement en matière plastique et ont une forme esthétique.

Des moyens d'indexation sont associés aux sélecteurs 36,37, ici sous forme de bagues. Ces moyens d'indexation comportent, en ce qui concerne le sélecteur secondaire 36, une bague fixe en rotation 40 supportée à translation par le fourreau 33 en étant soumise à l'action d'un ressort prenant appui sur des nervures de rigidification, que présente le fourreau 33, et sur la bague 40. Cette bague 40 a sa face avant pourvue de structures d'indexation pour coopération avec des doigts de la bague 36. Par rotation de cette bague 36, on provoque de manière indexée en rotation un entraînement en rotation de l'arbre 34, ainsi qu'un entraînement en translation du chariot secondaire 1 grâce aux doigts d'entraînement 4 engagés dans le trou 11 du chariot 1.

Le blocage en rotation de la bague 40 peut être réalisé par des nervures de guidage axiale coopérant avec la bague 40 et issues du corps 32, par le fourreau 33 alors rainuré, pour passage d'une saillie de la bague 40 et création d'une liaison du type tenon mortaise.

Pour ce faire, l'arbre 34 est rainuré et la bague 36 présente un moyeu engagé sur la partie principale du fourreau 33 et présentant intérieurement, en saillie radiale, une structure en forme de clavette s'engageant dans ladite rainure, d'orientation axiale.

Les moyens d'indexation, associés au sélecteur principal 37, comportent des plongeurs engagés chacun dans un trou borgne de la bague 37 et soumis à l'action d'un ressort prenant appui contre le fond du trou borgne et contre le fond d'un autre trou borgne pratiqué dans le plongeur.

Ce plongeur est propre à coopérer avec une bague 39 fixe emmanchée pour ce faire à force sur une surépaisseur épaulée du fourreau 33. La bague 39 présente des creusures pour réception des plongeurs.

Bien entendu, les moyens d'indexation associés à la bague 37 peuvent être du type de ceux associés à la bague 36 et vice versa.

Pour montage de la bague 37, l'extrémité avant du fourreau 33 est de diamètre réduit par rapport à la partie principale dudit fourreau, et cette partie avant entoure le second arbre 35 dont l'extrémité avant est crénelée pour fixation du bouton 38 par engagement à force.

L'extrémité avant du fourreau 33 prolonge l'arbre 34 et présente une rainure pour le passage de la saillie solidaire de la saillie, décrite ci-dessus, solidaire de la bague 36.

Ladite rainure du fourreau 33 est élargie circonférentiellement pour permettre une rotation de la bague 36 et de sa saillie. Les rainures du fourreau 33 et l'arbre 34 sont dans le prolongement axial l'une de l'autre, pour montage par enfilage axial de la bague 36 sur le fourreau 33 et liaison en rotation de la bague 36 avec le premier arbre 34.

La bague 37 est liée en rotation au second arbre 35 par l'intermédiaire du bouton 38 solidaire de l'arbre 35. Le bouton 38 est mobile en translation à l'encontre de l'action d'un ressort interposé axialement entre la bague 37 et le bouton 38.

L'extrémité arrière des arbres 34,35 est conformée en entraîneur 3,4 visible à la figure 1.

Plus précisément l'extrémité arrière du premier arbre 34 est élargie et présente un épaulement pour l'extrémité arrière également élargie du second arbre 35. L'extrémité arrière de l'arbre 35 est montée à l'intérieur de l'extrémité arrière de l'arbre 34.

L'entraîneur du second arbre 35 a une forme globalement en équerre et consiste en un doigt, à savoir le doigt 3, incliné axialement raccordé par une portion de raccordement à l'extrémité arrière de l'arbre 35.

L'entraîneur du premier arbre 34 a une forme de chape avec les deux doigts 4 séparés par une fente permettant le passage de la portion de raccordement du doigt 3 à l'arbre 35, ladite portion étant implantée à l'avant des doigts 4.

Ainsi par rotation de la bague 37, on provoque une rotation du bouton 38, de l'arbre 35 du doigt 3 et un entraînement en translation du chariot 2 grâce au trou borgne 21 de celui-ci. Ici la paroi de séparation 45 présente une fente axiale 145 pour passage du doigt 3 et de la butée 6. Cette fente 145 est délimitée par des moyens de rampes 10.

La butée 6 du chariot principal 2 est portée par une patte escamotable 5 d'orientation axiale, cette butée 6 est en forme de coin et la patte 5 présente des protubérances arrondies 7 pour coopération avec la face inférieure de la paroi 45.

Les protubérances 7 encadrent la butée 6 et s'étendent de part et d'autre de la fente 145, ici en forme de trou de serrure, pour passage de l'entraîneur de l'arbre 35.

Un élément élastique, ici un ressort à boudin 9, est interposé entre la patte 5 ou taquet escamotable et une patte rigide 8 portée par le chariot 2. Les pattes 5 et 8 s'étendent axialement, la patte 8 coopérant localement avec la platine 44 grâce à un doigt qu'elle présente à son extrémité libre. La patte 8 s'étend donc en-dessous de la patte 5, parallèlement à celle-ci.

Le ressort 9 est implanté au niveau de l'extrémité libre des pattes 5,8 dotées de centreurs pour montage du ressort 9. La patte 5 présente une réduction d'épaisseur au niveau de sa zone d'enracinement avec le chariot 2.

Le chariot secondaire 1 porte des plots propres a coopérer avec la face supérieure de la cloison 45 pour établissement de circuits électriques et alimentation des feux antibrouillard, ladite face supérieure portant pour ce faire des circuits électriques.

Le chariot 1 est maintenu transversalement par la paroi 45 et une paroi supérieure 46 dotée d'un trou 146 central pour passage des entraîneurs associés aux arbres 34 et 35. Le boîtier comporte ainsi deux compartiments l'un au-dessus de l'autre pour logement des chariots 1,2.

A son extrémité avant, le chariot 1 porte la contre-butée 12 également en forme de coin, qui pénètre dans la fente 145. La contre butée 12 est propre à cooperer avec la butée 6.

Ainsi qu'on l'aura compris, l'usager peut manoeuvrer le chariot 1 en agissant sur la bague 36 indépendamment du chariot 2. De même l'usager peut manoeuvrer comme il le désire le chariot 2 en agissant sur la bague 37.

Lorsque l'usager manoeuvre la bague 37, la butée 6 est propre à venir en contact avec la contre-butée 12 lorsque le chariot 2 passe de la position route à la position ville.

Lorsque l'usager poursuit la rotation de la bague 37, le chariot 2 passe de la position V à la position 0 et entraîne automatiquement le chariot 1 par coopération de la butée 6 avec la contre-butée 12, en sorte qu'une réinitialisation mécanique du feu antibrouillard arrière est obtenue automatiquement pour répondre à la législation.

Lors du passage de la position V à la position 0, la butée 6 est admise à s'escamoter par coopération de la protubérance 7 avec le moyen de rampe 10 de la cloison 45. Ce moyen de rampe consiste ici en une partie inclinée de la face inférieure de la paroi 45, qui présente une surépaisseur au niveau de la partie gauche de la figure 1.

Lors de l'escamotage, le ressort 9 est comprimé et la patte 5 s'escamote ainsi que la butée 7, l'escamotage étant facilité par la réduction d'épaisseur de la patte 5.

Ainsi qu'il ressort à l'évidence de la description et des dessins, toute la partie électrique est implantée dans le boîtier 42,43,44 et la manette 31 n'a qu'une fonction mécanique.

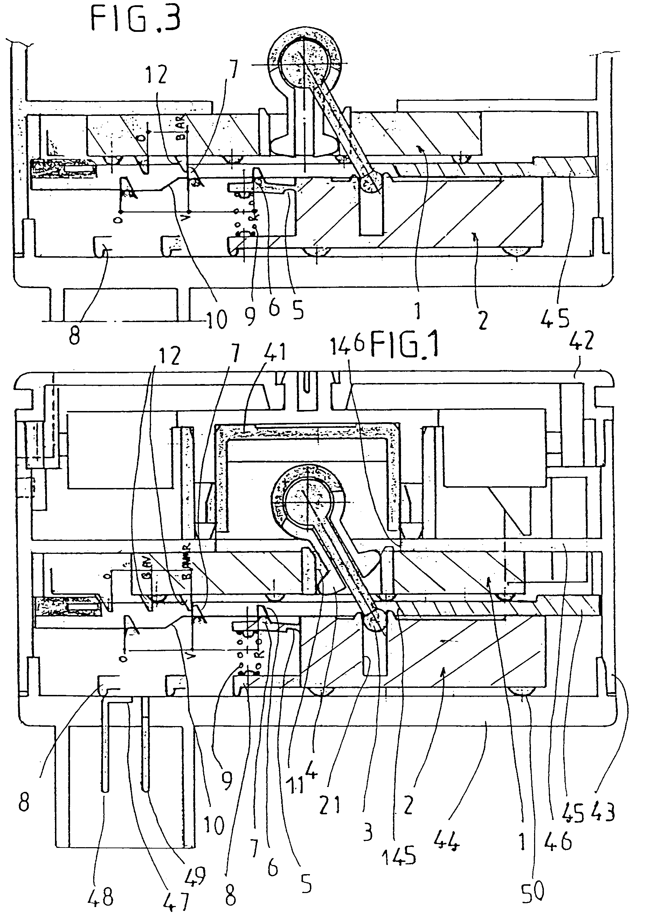

La taille du trou 146 et de la fente 145 est adaptée à la taille de l'entraîneur en forme d'équerre de l'arbre 35. Il en est de même du trou 11, dont la largeur est fonction de la distance entre les deux doigts 4. Le trou 21 est adapté à la taille du doigt 3 (figure 3).

Bien entendu, la présente invention n'est pas limitée à l'exemple de réalisation décrit. En particulier, le chariot 1 et la bague 36 peuvent allumer ou éteindre seulement le feu antibrouillard arrière (figure 3). Dans ce cas, le chariot 1 n'occupe que deux positions stables.

De même les moyens de rampes 10 ne sont pas nécessaires, en sorte que l'on peut également réinitialiser les feux antibrouillard avant lorsque le sélecteur principal 37 est manoeuvré de la position V à la position 0.

Le bouton 38 peut ne pas être mobile en translation.

## Claims

1. An electric switch for the combined control of the main lights and at least one rear fog light of a motor vehicle, of the kind comprising a lighting selector (37) at the disposal of the user and referred to as the main selector, for the main lights in a position referred to as the stop/town/cruise position, a lighting selector (36), also at the disposal of the user and referred to as the secondary selector, for at least one rear fog light, characterised in that, associated with each of the main (37) and secondary (36) selectors, there is a carriage, referred to here for convenience as the main carriage (2) and secondary carriage (1) respectively, in that the said carriages are mounted for straight line movement in a housing (42, 43, 44) one above the other, being separated by a bulkhead (45) referred to as a separating bulkhead, in that the said bulkhead (45) is slotted to define a passage for a stop element (6) carried by the main carriage (2), and in that the said stop element (6) is adapted to cooperate with a counter stop (12) carried by the secondary carriage (1), so that mechanical control for the return of the rear fog light to its initial condition is obtained when the main carriage (2) passes from the town position to the stop position.

2. A switch according to Claim 1, characterised in that the stop element (6) of the main carriage (2) is carried by an axially orientated, deflectable lug (5).

3. A switch according to Claim 2, characterised in that the stop element (6) is wedge-shaped, and the deflectable lug (5) has rounded projecting elements (7) for cooperation with the lower face of the separating wall (45).

4. A switch according to Claim 3, characterised in that a resilient element (9) is interposed between the deflectable lug (5) and a rigid lug (8) carried by the main carriage (2), the deflectable lug (5) having a reduced thickness at the level of its root zone with the carriage (2).

5. A switch according to any one of Claims 1 to 4, characterised in that the separating wall (45) has a longitudinal slot (145), to provide a passage for the stop element (6) and for penetration of the counter stop into it, the said slot being bounded by ramp means (10).

6. A switch according to any one of Claims 1 to 5, characterised in that the secondary carriage (1) is retained transversely by an upper wall (46) formed with a hole (146) for passage therethrough of actuating elements associated with drive stems (34, 35), which are fixed in rotation to the secondary selector (36) and the main selector (37) respectively.

7. A switch according to Claim 6, characterised in that the secondary selector (36) and main selector (37) are part of an operating stalk (31) which includes a body (32), a central sleeve (33) fixed to the body (32), the secondary selector (36) being mounted for rotation on the sleeve (33), a first drive stem (34) fixed to the secondary selector (36) for rotation with the latter and penetrating into the internal bore of the sleeve (33), and an end-mounted button (38) fixed to a second drive stem (35) for rotation with the latter.

8. A switch according to Claim 7, characterised in that the sleeve (33) is extended towards the front in order to support the main selector (37) for rotation of the latter, and in that rotary coupling means, giving axial mobility, are arranged between the main selector (37) and the button (38).

9. A switch according to Claim 8, characterised in that the front end of the sleeve (33) has a diameter which is reduced with respect to the main portion of the said sleeve, for mounting the main selector (37), and surrounds the second drive stem (35).

10. A switch according to Claim 9, characterised in that the front end of the sleeve (33) has an axial groove for accommodating a projecting element fixed to the secondary selector (36), and in that the first drive stem (34) has a groove constituting an axial extension of the groove in the sleeve (33), for coupling the first stem (34) in rotation with the main selector (37), which is provided at its inner periphery with a projecting element adapted to cooperate with the groove of the said drive stem (34).

## Patentansprüche

1. Elektrischer Schalter für die kombinierte Betätigung der Hauptscheinwerfer und mindestens einer Nebelschlußleuchte eines Kraftfahrzeugs, in der Ausführung mit einem Beleuchtungswählschalter (37) für die Hauptscheinwerfer mit den Positionen 'Aus'/'Stadtlicht'/'Fern- und Abblendlicht', der dem Benutzer zur Verfügung steht und als Hauptwählschalter bezeichnet wird, und mit einem Beleuchtungswählschalter (36) für mindestens eine Nebelschlußleuchte, der ebenfalls dem Benutzer zur Verfügung steht und als Nebenwählschalter bezeichnet wird, **dadurch gekennzeichnet,** daß zu jedem Haupt- (37) und Nebenwählschalter (36) ein Schlitten gehört, der hier der Einfachheit halber als Hauptschlitten (2) bzw. als Nebenschlitten (1) bezeichnet wird, daß die besagten Schlitten geradlinig beweglich in einem Gehäuse (42, 43, 44) übereinander gelagert sind, wobei sie durch eine als Trennwand bezeichnete Zwischenwand (45) voneinander getrennt sind, daß die besagte Zwischenwand (45) eine Aussparung für den Durchgang eines Anschlags (6) aufweist, der am Hauptschlitten (2) vorgesehen ist, und daß der besagte Anschlag (6) mit einem Gegenanschlag (12) zusammenwirken kann, der am Nebenschlitten (1) vorgesehen ist, so daß eine mechanische Reinitialisierung der Betätigung der Nebelschlußleuchte erfolgt, wenn der Hauptschlitten (2) von der Position 'Stadtlicht' zur Position 'Aus' gelangt.

2. Schalter nach Anspruch 1 , **dadurch gekennzeichnet,** daß der Anschlag (6) des Hauptschlittens (2) an einem versenkbaren Ansatz (5) mit axialer Ausrichtung angebracht ist.

3. Schalter nach Anspruch 2 , **dadurch gekennzeichnet,** daß der Anschlag (6) keilförmig ausgebildet ist und der versenkbare Ansatz (5) abgerundete Ausstülpungen (7) für das Zusammenwirken mit der Unterseite der Trennwand (45) aufweist.

4. Schalter nach Anspruch 3 , **dadurch gekennzeichnet,** daß ein elastisches Element (9) zwischen dem versenkbaren Ansatz (5) und einem am Hauptschlitten (2) angebrachten starren Ansatz (8) eingesetzt ist, wobei der versenkbare Ansatz (5) eine Dickenverringerung in Höhe seines Anschlußbereichs am Schlitten (2) aufweist.

5. Schalter nach einem der Ansprüche 1 bis 4 , **dadurch gekennzeichnet,** daß die Trennwand (45) einen Längsschlitz (145) für den Durchgang des Anschlags (6) und das Eingreifen des Gegenanschlags aufweist, wobei der besagte Schlitz durch Rampenmittel (10) begrenzt wird.

6. Schalter nach einem der Ansprüche 1 bis 5 , **dadurch gekennzeichnet,** daß der Nebenschlitten (1) in Querrichtung durch eine obere Wand (46) gehalten wird, die mit einem Loch (146) für den Durchgang der Mitnehmer versehen ist, die zu Antriebswellen (34, 35) gehören, welche drehfest mit dem Nebenwählschalter (36) bzw. mit dem Hauptwählschalter (37) verbunden sind.

7. Schalter nach Anspruch 6 , **dadurch gekennzeichnet,** daß der Nebenwählschalter (36) und der Hauptwählschalter (37) zu einem Lenkstockschalter (31) gehören, der einen Schaft (32), eine fest mit dem Schaft (32) verbundene mittige Hülse (33), den drehbar an der Hülse (33) gelagerten Nebenwählschalter (36), eine erste Antriebswelle (34), die drehfest mit dem Nebenwählschalter (36) verbunden ist und in die Innenbohrung der Hülse (33) eingreift, sowie einen Abschlußknopf (38) umfaßt, der drehfest mit einer zweiten Antriebswelle (35) verbunden ist.

8. Schalter nach Anspruch 7 , **dadurch gekennzeichnet,** daß die Hülse (33) für die drehbare Lagerung des Hauptwählschalters (37) nach vorn verlängert ist und daß Drehverbindungsmittel mit axialer Beweglichkeit zwischen dem Hauptwählschalter (37) und dem Knopf (38) vorgesehen sind.

9. Schalter nach Anspruch 8 , **dadurch gekennzeichnet,** daß das vordere Ende der Hülse (33) einen verringerten Durchmesser im Verhältnis zum Hauptteil der besagten Hülse aufweist, um den Einbau des Hauptwählschalters (37) zu ermöglichen, und die zweite Antriebswelle (35) umgibt.

10. Schalter nach Anspruch 9 , **dadurch gekennzeichnet,** daß das vordere Ende der Hülse (33) eine axiale Nut für den Durchgang eines fest mit dem Nebenwählschalter (36) verbundenen Vorsprungs aufweist und daß die erste Antriebswelle (34) eine Nut in der axialen Verlängerung der Nut der Hülse (33) aufweist, um die Drehverbindung der ersten Welle (34) mit dem Hauptwählschalter (37) herbeizuführen, der an seinem inneren Umfang mit einem Vorsprung versehen ist, um mit der Nut der besagten Antriebswelle (34) zusammenzuwirken.

## Revendications

1. Commutateur électrique pour la commande combinée des feux principaux d'éclairage et d'au moins un feu antibrouillard arrière d'un véhicule automobile, du genre comportant un sélecteur d'éclairage (37), à la disposition de l'usager, dit sélecteur principal des feux principaux à position dite arrêt/ville/route, un sélecteur d'éclairage (36), également à la disposition de l'usager, dit sélecteur secondaire d'au moins un feu antibrouillard arrière, caractérisé en ce que, à chaque sélecteur principal (37) et secondaire (36), est associé un chariot, dit ici par commodité respectivement chariot principal (2) et chariot secondaire (1), en ce que lesdits chariots sont montés mobiles à translation dans un boîtier (42,43,44), l'un au-dessus de l'autre en étant séparés par une cloison (45), dite cloison de séparation, en ce que ladite cloison (45) est échancrée pour passage d'une butée (6) portée par le chariot principal (2), et en ce que ladite butée (6) est propre à coopérer avec une contre-butée (12) portée par le chariot secondaire (1), en sorte qu'une réinitialisation mécanique de la commande du feu antibrouillard arrière est obtenue, lorsque le chariot principal (2) passe de la position ville à la position arrêt.

2. Commutateur selon la revendication 1, caractérisé en ce que la butée (6) du chariot principal (2) est portée par une patte escamotable (5) d'orientation axiale.

3. Commutateur selon la revendication 2, caractérisé en ce que la butée (6) est en forme de coin et la patte escamotable (5) présente des protubérances arrondies (7) pour coopération avec la face inférieure de la paroi de séparation (45).

4. Commutateur selon la revendication 3, caractérisé en ce qu'un élément élastique (9) est interposé entre la patte escamotable (5) et une patte rigide (8) portée par le chariot principal (2), la patte escamotable (5) présentant une réduction d'épaisseur au niveau de sa zone d'enracinement avec le chariot (2).

5. Commutateur selon l'une quelconque des revendications 1 à 4, caractérisé en ce que la paroi de séparation (45) présente une fente longitudinale (145) pour passage de la butée (6) et pénétration de la contre-butée, ladite fente étant délimitée par des moyens de rampes (10).

6. Commutateur selon l'une quelconque des revendications 1 à 5, caractérisé en ce que le chariot secondaire (1) est maintenu transversalement par une paroi supérieure (46) dotée d'un trou (146) pour passage des entraîneurs associés à des arbres d'entraînement (34,35) solidaires en rotation respectivement du sélecteur secondaire (36) et du sélecteur principal (37).

7. Commutateur selon la revendication 6, caractérisé en ce que les sélecteurs secondaire (36) et principal (37) appartiennent à une manette (31) comportant un corps (32), un fourreau central (33) solidaire du corps (32), le sélecteur secondaire (36) monté de manière rotative sur le fourreau (33), un premier arbre d'entraînement (34) solidaire en rotation du sélecteur secondaire (36) et pénétrant dans l'alésage interne du fourreau (33), un bouton d'extrémité (38) solidaire en rotation d'un second arbre d'entraînement (35).

8. Commutateur selon la revendication 7, caractérisé en ce que le fourreau (33) est prolongé vers l'avant pour supporter à rotation le sélecteur principal (37) et en ce que des moyens de liaison à rotation, avec mobilité axiale, sont prévus entre le sélecteur principal (37) et le bouton (38).

9. Commutateur selon la revendication 8, caractérisé en ce que l'extrémité avant du fourreau (33) est de diamètre réduit par rapport à la partie principale dudit fourreau, pour montage du sélecteur principal (37), et entoure le second arbre d'entraînement (35).

10. Commutateur selon la revendication 9, caractérisé en ce que l'extrémité avant du fourreau (33) présente une rainure axiale pour passage d'une saillie solidaire du sélecteur secondaire (36), et en ce que le premier arbre d'entraînement (34) présente une rainure dans le prolongement axial de la rainure du fourreau (33), pour liaison en rotation du premier arbre (34) avec le sélecteur principal (37) pourvu à sa périphérie interne d'une saillie propre à coopérer avec la rainure dudit arbre d'entraînement (34).
